Europäisches Patentamt

(19) European Patent Office

Office européen des brevets

(11) Publication number: **0 089 171**
**B1**

(12) **EUROPEAN PATENT SPECIFICATION**

(45) Date of publication of patent specification: **22.07.87**

(51) Int. Cl.⁴: **G 01 P 13/04**

(21) Application number: **83301247.9**

(22) Date of filing: **08.03.83**

(54) **Quadrature tach decoder circuit.**

(30) Priority: **15.03.82 US 358395**

(43) Date of publication of application:
**21.09.83 Bulletin 83/38**

(45) Publication of the grant of the patent:
**22.07.87 Bulletin 87/30**

(84) Designated Contracting States:
**CH DE FR GB LI NL**

(56) References cited:
**DE-A-2 352 975**
**US-A-3 710 265**
**US-A-4 300 039**
**US-A-4 308 500**

**ELECTRONICS INTERNATIONAL, vol. 54, no. 12, June 1981, page 167, New York USA; B. McCLELLAND, "Fewer parts resolve shaft encoder data"**

(73) Proprietor: **AMPEX CORPORATION**
**401 Broadway M.S. 3-35**
**Redwood City California 94063-3199 (US)**

(72) Inventor: **Williams, Marshall**
**35900 Turpin Way**
**Fremont California (US)**
Inventor: **O'Gwynn, David C.**
**1521 Lago Apt. 24**
**San Mateo California (US)**

(74) Representative: **Horton, Andrew Robert Grant et al**
**BOULT, WADE & TENNANT 27 Furnival Street London, EC4A 1PQ (GB)**

Courier Press, Leamington Spa, England.

## Description

### Background and Summary of the Invention

The invention relates to sensing the direction and rate of rotation of a rotating member and more particularly to a circuit for detecting a rotational direction change on the first edge of a tachometer pulse that is out of sequence. The circuit also may be used to detect linear motion, i.e., x—y position, direction, etc.

There are various servo systems, particularly in the field of television, audio, instrumentation, manufacturing, etc., which are employed to control precisely the speed and position of a rotating member such as a reel, capstan, disc, etc, or to control the linear speed and position of a translating member. To provide such control, it is necessary first to detect precisely the direction and rate of rotation of the rotating member. In addition, in very sophisticated systems, it is preferable that detection occurs at a very fast response time.

Typical rotation sensing circuits are those employed in conjunction with a pair of rotation sensing tachometers disposed 90° apart, i.e., in quadrature, which tachometers generate two pulse trains with a phase relationship indicative of the direction and a frequency indicative of the rate of rotation of the member. Most of these sensing circuits require one or more pulses from each phase of the two phase tachs before a change in direction of rotation can be detected. It follows that the response times of such circuits are correspondingly compromised, and ambiguous signals are generated in instances where the rotating member experiences multiple direction changes before two tach pulses have occurred.

The invention overcomes the disadvantages of the above movement sensing circuits and may be used in any control system wherein tach pulses indicative of rotational or translational direction and rate are generated.

US—A—3710265 describes a quadrature-to-serial pulse converter. The converter provides a first or a second serial pulse train at outputs each corresponding to opposite directions of travel. The incoming quadrature signals are applied in non-inverted and inverted form to AND gates and thence to an exclusive OR gate whose output is applied to two monostable multivibrators and an AND gate, providing a clock signal having a frequency equal to four times the frequency of either input signal. Four gates are used to produce the four possible combinations of logic states of the two serial pulse trains. Four latches are utilized, each to store one of these four conditions. Each time a change in these conditions occurs, the corresponding latched-in information is updated. Eight more gates are utilized to compare the stored conditions with new conditions supplied by the said four gates. Four of these eight conditions detected by the set of eight gates are respectively added by each of two output gates. A resulting pulse train is obtained at the output of one of the other of these gates, depending on the direction of travel.

According to a first aspect of the invention there is provided a circuit for detecting movement of a member and operative to respond to two quadrature pulse trains which occur in response to movement of the member, comprising: first gate means coupled to receive and compare said pulse trains; first gate/delay means coupled to receive and delay an output signal of said first gate means and to compare said delayed output signal and a non-delayed output signal of said first gate means so as to generate multiple frequency clock pulses; second gate/delay means coupled to generate pulse train sequence pulses indicative of which of the two quadrature pulse trains is leading; logic means for generating a logic state change having a first input coupled to receive said pulse train sequence pulses and a second input coupled to receive said clock pulses, said first input of said logic means being in a first logic state when said clock pulse occurs to indicate a first direction of member movement and being in a second logic state when said clock pulse occurs to indicate a second direction; and means external to said first and second gate-delay and logic means for delaying said multiple frequency clock pulses so that a reference edge thereof always occurs after said logic state change generated by said logic means.

Further aspects of the invention are independently claimed in claims 4 and 7 hereinafter.

### Brief Description of the Drawings

FIGURE 1 is a schematic diagram exemplifying the invention combination.

FIGURE 2A—2K is a graph depicting the waveforms generated at various points in the schematic of Figure 1.

FIGURE 3 is a schematic diagram of an alternative embodiment of the invention.

FIGURE 4A—4I is a graph depicting the wave forms generated at various points in the schematic of Figure 3.

FIGURE 5 is a detailed schematic of the circuit of Figure 3.

### Description of the Preferred Embodiments

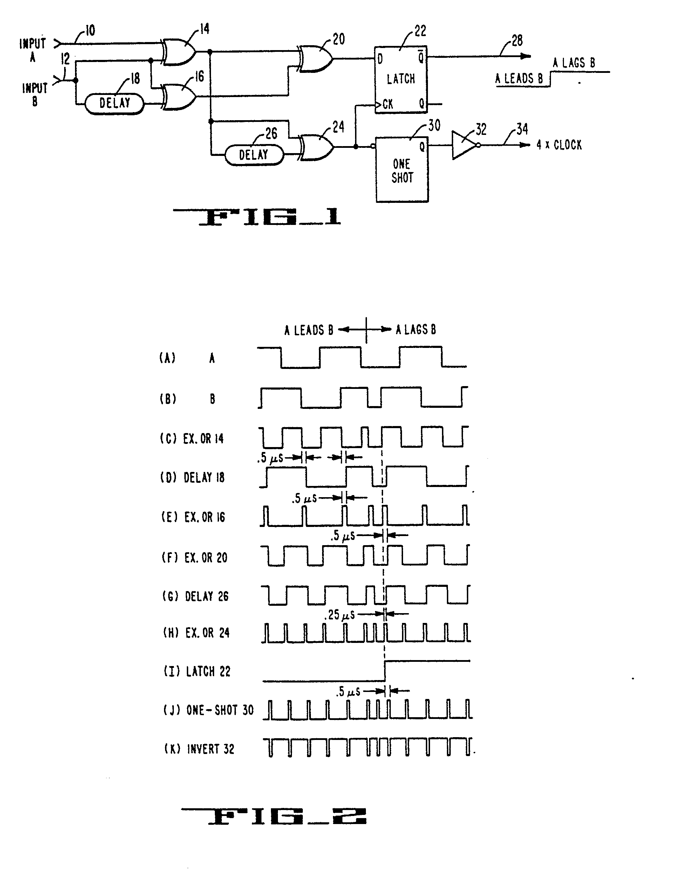

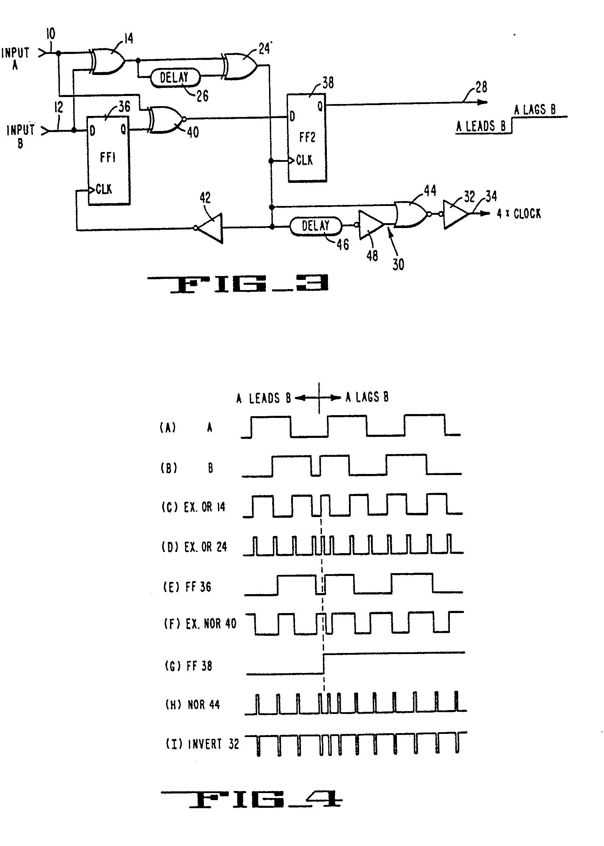

Referring to Figures 1 and 2, a pair of input terminals 10, 12 receive respective squarewave signals, herein labeled inputs A and B, respectively. The two squarewave signals A and B are 90° apart in phase as depicted in Figure 2A, 2B, and are generated via generally conventional quadrature tachometer devices (not shown) coupled to sense the movement of the rotating member, or of the linear member, under control (not shown). Signals A and B are coupled via the terminals 10, 12 to an exclusive OR gate 14 for comparison. Signal B also is fed directly to one input of an exclusive OR gate 16, and to the other input thereof via a short duration (e.g., 0.5 microsecond) delay 18 (Figure 2D). The output waveform from the gate 14 is a squarewave signal at twice the frequency of either input A or B (Figure 2C), and is fed to another exclusive OR gate 20. The output of gate 16 (Figure 2E) is a pulse train of short duration pulse (e.g., 0.5 us) generated on the rising and falling edges of input B. The short pulses are fed to the second input of exclusive OR gate 20. The latter gate 20 compares the twice-frequency signal with the short pulses, and supplies the resulting signal of Figure 2F, corresponding to the direction pulse sequence, to the D input of D-type latch 22. The transitions of this signal are substantially contemporary with the transitions of A but are delayed (by 0.5 µs) with respect to the transitions of B.

The output from exclusive OR gate 14 is coupled directly to one input of another exclusive OR gate 24, and also to the second input thereof via a very short delay 26 (e.g. 0.25 µs) shown in Figure 2G. Gate 24 and delay 26 generate narrow clock pulses as in Figure 2H, on every edge of both inputs A and B. The resulting narrow clock pulses have four times the frequency of the tach inputs and are used to clock the D-type latch 22. The clock pulses occur immediately after a transition in either of the input signals A and B.

Thus, if the phase of A leads that of B in time, the "D" input of the latch 22 is always high when a clock pulse occurs, and the latch Q output corresponding to the direction signal is low (Figure 2I). Conversely, when the phase of tach A lags B, the D input is always low during the clock pulse, and the latch 22 Q output direction signal is high (Figure 2I). Therefore, when the direction of rotation of the rotating element changes, the first edge of A or of B that is out of sequence causes the latch 22 to change state. If the latch 22 output on an output terminal 28 is low, phase A leads B, and if the output on terminal 28 is high, phase A lags B.

The narrow clock pulses of exclusive OR gate 24 are fed to a one-shot multivibrator 30 with inherent 0.25 us delay, and thence to an inverter 32. The one-shot 30 produces positive pulses when triggered by a negative-going input (Figure 2J) which positive pulses are inverted by inverter 32 and are provided as negative pulses on output terminals 34 at four times the frequency of the inputs A, B (Figure 2K). As may be seen in Figure 2K, output terminal 34 provides a 4× clock pulse whose rising edge always occurs after a direction change.

Although only one set of operating conditions is depicted in Figure 2, it is to be understood that various different sets of conditions are possible, depending upon the direction of motion, etc, with corresponding pulse waveforms. In all cases, however, the circuit senses the change of sequence of the tach pulses to determine the change of rotational or linear direction.

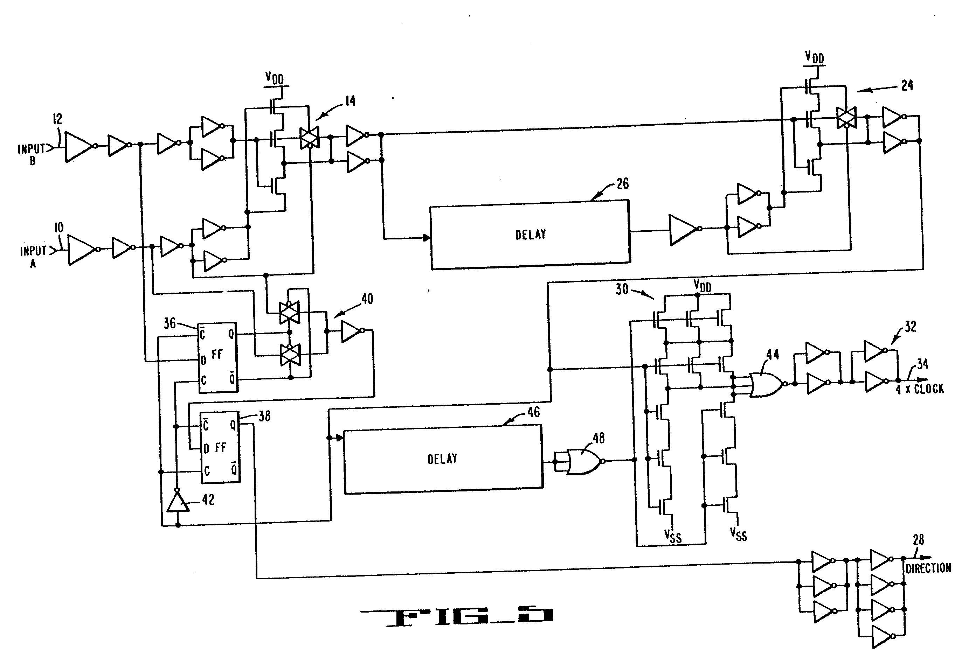

Figure 3 depicts an alternative embodiment of the invention combination, wherein similar components are similarly numbered. Figure 4 illustrates the waveforms generated by the circuit of Figure 3. Essentially, delay 18 and exclusive OR gate 16 are replaced with a D-type flip-flop 36, the exclusive OR gate 20 is defined by an exclusive NOR gate 40, while the D-type latch 22 is defined by a D-type flip-flop 38.

Thus, tach input A (Figure 4A) is fed via terminal 10 to both the exclusive OR gate 14, and the exclusive NOR gate 40, and input B (Figure 4B) is fed via terminal 12 to gate 14 and also to the D input of the flip-flop 36. Flip-flop 36 is triggered by the negative edge of the 4×-tach clock pulses (Figure 4D) from the exclusive OR gate 24. Given a state at the D input, when the clock pulse of gate 24 falls, that state is transferred to output Q of flip-flop 36. Thus the signal is delayed by the width of the clock pulse. The Q output of flip-flop 36 (Figure 4E) is coupled to the second input of gate 40, whose output corresponds to the direction pulse sequence (Figure 4F) and feeds the D input of the flip-flop 38. The signal 4F has transitions which are contemporary with those of A and transitions which are delayed by the clock pulse duration with respect to B. The Q output of flip-flop 38 provides the direction signal corresponding to the logic state of Figure 4G on output terminal 28, which is identical to the signal of Figure 2I generated by the circuit of Figure 1. In Figure 4, however, if the output of exclusive NOR gate 40 is low when the rising edge of the clock pulse from exclusive OR gate 24 occurs, then the output state of flip-flop 38 goes low indicating that A leads B (Figure 4G). Upon a change of direction, the gate 40 output is high when the rising edge of the clock pulse occurs, thereby providing the immediate change of state of flip-flop 38 to a high (Figure 4G).

Exclusive OR gate 24 supplies the 4×-tach clock pulse of Figure 4D to clock the flip-flop 38 and also to clock flip-flop 36 via an inverter 42. The actual schematic is shown in Figure 5, wherein there are two clock inputs on both flip-flops 36 and 38. The inverter 42 drives both the clock input and clock-bar input of each flip-flop with the same clock pulse.

The clock pulse of gate 24 is also coupled directly to one input of a NOR gate 44, and further to a second input of gate 44 via a delay 46 and inverter 48. The NOR gate 44, delay 46 and inverter 48 essentially define the one-shot 30 of Figure 1. The output of NOR gate 44 (Figure 4H) comprises the 4×-tach clock, which is inverted via the inverter 32 and supplied to the output terminal 34 as the negative pulses with positive rising edges, shown in Figure 4I, and also in Figure 2K. Thus it may be seen that the circuits of Figures 1 and 3 receive the same tach signal inputs and provide therefrom the same output control signals.

Figure 5 depicts the schematic diagram of Figure 3 in greater detail, with similar components being identified with similar numbers. Since the circuit and its operation is described with respect to Figures 3, 4 and also Figures 1, 2, further discussion is not believed necessary herein.

Although the invention is described herein with respect to detection of a rotating member, it is to be understood that the circuit is equally applicable to detecting the direction and rate of translation of a linear member. In such system, the pair of electrical quadrature signals are generated via a pair of optical, magnetic, etc, transducers operatively arranged to monitor motion of the linear member. The transducers are displaced to generate the quadrature signals A and B upon translation of the member. Since the configuration of such a linear, quadrature generating system is generally known to those skilled in the art, no further description thereof is believed necessary herein.

**Claims**

1. A circuit for detecting movement of a member and operative to respond to two quadrature pulse trains which occur in response to movement of the member, comprising: first gate means (14) coupled to receive and compare said pulse trains; first gate/delay means (24, 26) coupled to receive and delay an output signal of said first gate means and to compare said delayed output signal and a non-delayed output signal of said first gate means so as to generate multiple frequency clock pulses; second gate/delay means (18, 16, 20; or 36, 40, 42) coupled to generate pulse train sequence pulses indicative of which of the two quadrature pulse trains is leading; logic means (22 or 38) for generating a logic state change having a first input coupled to receive said pulse train sequence pulses and a second input coupled to receive said clock pulses, said first input of said logic means being in a first logic state when said clock pulse occurs to indicate a first direction of member movement and being in a second logic state when said clock pulse occurs to indicate a second direction; and means (30, 32) external to said first and second gate/delay and logic means for delaying said multiple frequency clock pulses so that a reference edge thereof always occurs after said logic state change generated by said logic means.

2. A circuit according to Claim 1 wherein: the first gate means (14) comprises a first exclusive OR gate; said second gate/delay means comprises a delay means (18) coupled to delay one of said two pulse trains, a second exclusive OR gate (16) coupled to receive delayed and non-delayed forms of said one pulse train for generating short duration pulses, and a third exclusive OR gate (20) coupled to receive said short duration pulses and an output signal from said first exclusive OR gate for generating the pulse train sequence pulses; and wherein: said first input of the logic means is coupled to an output of the third exclusive OR gate for generating the logic state indicative of the pulse train sequence in response to the clock pulses.

3. A circuit according to Claim 1 or Claim 2 wherein: said first gate/delay means comprises a delay means (26) coupled to delay an output signal from said first gate means, and an exclusive OR gate (24) coupled to receive said delayed and a non-delayed output signal from said first gate means and wherein said second input of said logic means is clocked by an output signal of this exclusive OR gate (24).

4. A circuit for decoding two quadrature pulse trains, comprising: a first exclusive-OR gate (14) for comparing the pulse trains and for generating 2-times pulse train frequency pulses; first means (16, 18) including a delay means (18) coupled to receive one of said pulse trains for generating a narrow pulse at each of the pulse edges; a second exclusive-OR gate (20) coupled to receive the 2-times frequency pulses and the narrow pulses for generating pulse train sequence pulses; second means (24, 26) including a delay means (26) coupled to the first exclusive-OR gate means for generating 4-times pulse train frequency pulses; bistable logic means (22) coupled to the second exclusive OR gate means for generating a selected logic state in response to the 4-times frequency pulses; and means for delaying said 4-times frequency pulses so that a reference edge thereof always occurs after a change in the logic state of the bistable logic means.

5. A circuit according to Claim 1 wherein: the first gate means (14) comprises a first exclusive OR gate; said second gate/delay means comprises a bistable logic means (36) having a first input coupled to receive and delay one of said pulse trains and having a second input for receiving said multiple frequency clock pulses; and a second exlusive OR gate (40) is coupled to receive the other pulse train and said delayed one of the pulse trains for generating the pulse train sequence pulses.

6. A circuit according to Claim 5 wherein: said first gate/delay means (24, 26) comprises a delay means (26) coupled to an output of said first exclusive OR gate and a third exclusive OR gate (24) coupled to receive said delayed and a non-delayed signal from said first exclusive OR gate for providing said multiple frequency clock pulses.

7. A circuit for decoding two quadrature pulse trains, comprising: first exclusive OR gate means (14) for receiving and comparing the pulse trains and for generating 2-times pulse train frequency pulses; means (24, 26) including a delay means (26) coupled to an output of the first exclusive OR gate means for generating a 4-times frequency pulses; first bistable logic means (36) arranged to delay one of said pulse trains, and having a clock input responsive to the 4-times frequency pulses; a second exclusive OR gate (40) coupled to compare the said delayed pulse train with the other pulse train and to generate pulse train sequence pulses; second bistable logic means (38) having a first input coupled to an output of said second exclusive OR gate for generating a selected logic state in response to the 4-times frequency pulses; and means (30, 32) for delaying said 4-times frequency pulses so that a reference edge thereof always occurs after a change in the logic state of the second bistable logic means.

**Patentansprüche**

1. Schaltungsanordnung zur Detektierung der Bewegung eines Elementes, die auf zwei als Funktion der Bewegung des Elementes auftretende Quadraturimpulsfolgen anspricht, mit einer ersten, die Impulsfolgen aufnehmenden und vergleichenden Gatteranordnung (14); einer ersten Gatter-/Verzögerungsanordnung (24, 26), die ein Ausgangssignal der ersten Gatteranordnung aufnimmt und verzögert sowie das verzögerte Ausgangssignal und ein nicht verzögertes Ausgangssignal der ersten Gatteranordnung vergleicht, um Mehrfachfrequenz-Taktsignale zu erzeugen; einer zweiten Gatter-/Verzögerungsanordnung (18, 16, 20; oder 36, 40, 42), die Impulsfolge-Sequenzimpulse erzeugt, welche anzeigen, welche der beiden Quadraturimpulsfolgen voreilt; einer Logikanordnung (22 oder 38) zur Erzeugung einer Logikstatusänderung mit einem ersten, die Impulsfolge-Sequenzimpulse aufnehmenden Eingang und einem zweiten, die Taktsignale aufnehmenden Eingang, wobei der erste Eingang der Logikanordnung einen ersten Logikstatus annimmt, wenn der auftretende Taktimpuls eine erste Richtung der Elementbewegung anzeigt, und einen zweiten Logikstatus annimmt, wenn der auftretende Taktimpuls eine zweite Richtung anzeigt; und mit einer in Bezug auf die erste und zweite Gatter-/Verzögerungsanordnung sowie die Logikanordnung externe Anordnung (30, 32) zur Verzögerung der Mehrfachfrequenz-Taktimpulse derart, daß eine Referenzflanke dieser Taktimpulse immer nach der durch die Logikanordnung erzeugte Logikstatusänderung auftritt.

2. Schaltungsanordnung nach Anspruch 1, in der die erste Gatteranordnung (14) ein erstes Exklusiv- oder Gatter umfaßt; die zweite Gatter-/Verzögerungsanordnung eine der beiden Impulsfolgen verzögernde Verzögerungsstufe (18), ein zweites, eine verzögerte und eine nicht verzögerte Form der einen Impulsfolge aufnehmendes und Impulse kurzer Dauer erzeugendes Exklusiv- oder Gatter (16) sowie ein drittes, die Impulse kurzer Dauer und ein Ausgangssignal des ersten Exklusiv- oder Gatter aufnehmendes und die Impulsefolge-Sequenzimpulse erzeugendes Exklusiv- oder Gatter (20) umfaßt; und in der der erste Eingang der Logikanordnung an einen Ausgang des dritten Exklusiv- oder -Gatters angekoppelt ist, um als Funktion der Taktimpulse den die Impulsfolgesequenz anzeigenden Logikstatus zu erzeugen.

3. Schaltungsanordnung nach Anspruch 1 oder Anspruch 2, in der die erste Gatter-/Verzögerungsanordnung eine ein Ausgangssignal der ersten Gatteranordnung verzögernde Verzögerungsstufe (26) und ein das verzögerte und ein nicht verzögertes Ausgangssignal der ersten Gatteranordnung aufnehmendes Exklusiv- oder -Gatter (24) umfaßt und in der der zweite Eingang der Logikanordnung durch ein Ausgangssignal dieses Exklusiv- oder -Gatters (24) getaktet ist.

4. Schaltungsanordnung zur Dekodierung von zwei Quadraturimpulsfolgen mit einem ersten Exklusiv- oder -Gatter (14) zum Vergleich der Impulsfolgen und zur Erzeugung zweifacher Impulsfolge-Frequenzimpulsen, einer ersten Anordnung (16, 18), die eine Verzögerungsstufe (18) enthält, welche eine der Impulsfolgen aufnimmt, um einen schmalen Impuls in jeder Impulsflanke zu erzeugen; einem zweiten Exklusiv- oder -Gatter (20), das Zweifach-Frequenzimpulse und die schmalen Impulse zur Erzeugung von Impulsfolge-Sequenzimpulsen aufnimmt; einer zweiten Anordnung (24, 26), die eine an das erste Exklusiv- oder -Gatter angekoppelte Verzögerungsstufe (26) zur Erzeugung von Vierfach-Impulsfolge-Frequenzimpulsen enthält; einer an das zweite Exklusiv- oder -Gatter angekoppelten bistabilen Logikanordnung (22) zur Erzeugung eines ausgewählten Logikstatus als Funktion der Vierfach-Frequenz-Impulse; und mit einer Anordnung zur Verzögerung der Vierfach-Frequenz-Impulse, derart, daß eine Referenzflanke dieser Impulse nach einer Änderung des Logikstatus der bistabilen Logikanordnung auftritt.

5. Schaltungsanordnung nach Anspruch 1, in der die erste Gatteranordnung (14) ein erstes Exklusiv- oder -Gatter umfaßt; die zweite Gatter-/Verzögerungsanordnung eine bistabile Logikanordnung (36) umfaßt, die mit einem ersten Eingang eine der Impulsfolgen aufnimmt und verzögert und mit einem zweiten Eingang die Mehrfachfrequenz-Taktimpulse aufnimmt; und in der ein zweites Exklusiv- oder -Gatter (40) die andere Impulsfolge und die verzögerte eine Impulsfolge zur Erzeugung der Impulsfolge-Sequenzimpulse aufnimmt.

6. Schaltungsanordnung nach Anspruch 5, in der die erste Gatter-/Verzögerungsanordnung (24, 26) eine an einen Ausgang des ersten Exklusiv- oder -Gatters angekoppelte Verzögerungsstufe (26) und ein drittes, das verzögerte und ein nicht verzögertes Signal vom ersten Exklusiv- oder -Gatter aufnehmendes Exklusiv- oder -Gatter (24) zur Erzeugung der Mehrfachfrequenz-Taktimpulse umfaßt.

7. Schaltungsanordnung zur Dekodierung von zwei Quadratur-Impulsfolgen mit einem ersten Exklusiv- oder -Gatter (14) zur Aufnahme und zum Vergleich der Impulsfolgen sowie zur Erzeugung von Zweifach-Impulsfolge-Frequenzimpulsen; einer Anordnung (24, 26), die eine an einen Ausgang des ersten Exklusiv- oder -Gatters angekoppelte Verzögerungsstufe (26) zur Erzeugung von Vierfach-Frequenz-Impulsen enthält, einer ersten bistabilen Logikanordnung (36) zur Verzögerung einer der Impulsfolgen mit einem von den Vierfach-Frequenz-Impulsen angesteuerten Takteingang; einem zweiten Exklusiv- oder -Gatter (40) zum Vergleich der verzögerten Impulsfolge mit der anderen Impulsfolge und zur Erzeugung von Impulsfolge-Sequenzimpulsen; einer zweiten bistabilen Logikanordnung (38) mit einem ersten, an einen Ausgang des zweiten Exklusiv- oder -Gatters angekoppelten Eingang zur Erzeugung eines ausgewählten Logikstatus als Funktion der Vierfach-Frequenzimpulse; und mit einer Anordnung (30, 32) zur Verzögerung der Vierfach-Frequenz-Impulse, derart, daß eine Referenzflanke dieser Impulse immer nach einer Änderung des Logikstatus der zweiten bistabilen Logikanordnung auftritt.

## Revendications

1. Circuit pour détecter le mouvement d'un élément, fonctionnant de façon à réagir à deux trains d'impulsions en quadrature produits en réponse aux mouvements de l'élément et comprenant: un premier circuit à porte (14) connecté de façon à recevoir et comparer lesdits trains d'impulsions; un premier circuit à porte/retard (24, 26) connecté de façon à recevoir et à retarder un signal de sortie dudit premier circuit à porte, et de façon à comparer ledit signal de sortie retardé à un signal de sortie non retardé dudit premier circuit à porte, de manière à engendrer des impulsions d'horloge à fréquence multipliée; un deuxième circuit à porte/retard (18, 16, 20; ou 36, 40, 42) connecté de façon à engendrer des impulsions de séquence de trains d'impulsions, indiquant celui des deux trains d'impulsions en quadrature qui est le premier; des moyens logiques (22 ou 38) pour engendrer un changement d'état logique, comprenant une première entrée connectée de façon à recevoir lesdites impulsions de séquence de trains d'impulsions et une deuxième entrée connectée de façon à recevoir lesdites impulsions d'horloge, ladite première entrée desdits moyens logiques étant dans un premier état logique lorsque ladite impulsion d'horloge se produit pour indiquer un premier sens de déplacement de l'élément, et étant dans un deuxième état logique lorsque ladite impulsion d'horloge se produit pour indiquer un deuxième sens; et des moyens (30, 32) externes auxdits premier et deuxième circuits à porte/retard èt auxdits moyens logiques pour retarder lesdites impulsions d'horloge à fréquence multipliée de telle sorte qu'un front de référence de ces dernières se produise toujours après ledit changement d'état logique engendré par lesdits moyens logiques.

2. Circuit selon la revendication 1, caractérisé en ce que le premier circuit à porte (14) comprend une première porte OU exclusif; ledit deuxième circuit à porte/retard comprend un premier moyen de retard (18) connecté de façon à retarder l'un des deux trains d'impulsions, une deuxième porte OU exclusif (16) connectée de façon à recevoir des formes retardée et non retardée dudit premier train d'impulsions pour engendrer des impulsions de courte durée, et une troisième porte OU exclusif (20) connectée de façon à recevoir lesdites impulsions de courte durée et un signal de sortie provenant de ladite première porte OU exclusif pour engendrer les impulsions de séquence de trains d'impulsions; et en ce que ladite première entrée des moyens logiques est connectée à une sortie de la troisième porte OU exclusif pour engendrer l'état logique indiquant la séquence des trains d'impulsions en réponse aux impulsions d'horloge.

3. Circuit selon la revendication 1 ou 2, caractérisé en ce que ledit premier circuit à porte/retard comprend un moyen de retard (26) connecté de façon à retarder un signal de sortie provenant dudit premier circuit à porte, et une porte OU exclusif (24) connectée de façon à recevoir ledit signal de sortie retardé et un signal de sortie non retardé produit par ledit premier circuit à porte, et en ce que ladite seconde entrée desdits moyens logiques est synchronisée par un signal de sortie de cette porte OU exclusif (24).

4. Circuit pour décoder deux trains d'impulsions en quadrature, comprenant: une première porte OU exclusif (14) pour comparer les trains d'impulsions et pour engendrer des impulsions ayant 2 fois la fréquence des trains d'impulsions; des premiers moyens (16, 18) comprenant un moyen de retard (18) connecté de façon à recevoir l'un desdits trains d'impulsions pour engendrer une impulsion étroite à chacun des fronts des impulsions; une deuxième porte OU exclusif (20) connectée de façon à recevoir les impulsions à fréquence double et les impulsions étroites pour engendrer des impulsions de séquence de trains d'impulsions; des seconds moyens (24, 26) comprenant un moyen de retard (26) connecté à la première porte OU exclusif pour engendrer des impulsions ayant 4 fois la fréquence des trains d'impulsions; des moyens logiques bistables (22) connectés à la seconde porte OU exclusif pour engendrer un état logique sélectionné en réponse aux impulsions à fréquence quadruple; et des moyens pour retarder lesdites impulsions à fréquence quadruple de telle sorte qu'un front de référence de ces dernières se produise toujours après un changement de l'état logique des moyens logiques bistables.

5. Circuit selon la revendication 1, caractérisé en ce que le premier circuit à porte (14) comprend une première porte OU exclusif; le deuxième circuit à porte/retard comprend un moyen logique bistable (36) ayant une première entrée connectée de façon à recevoir et retarder l'un desdits trains d'impulsions, et ayant une deuxième entrée pour recevoir lesdites impulsions d'horloge à fréquence multipliée; et une deuxième porte OU exclusif (40) est connectée de façon à recevoir l'autre train d'impulsions et ledit train d'impulsions retardé pour engendrer les impulsions de séquence de trains d'impulsions.

6. Circuit selon la revendication 5, caractérisé en ce que ledit premier circuit à porte/retard (24, 26) comprend un moyen de retard (26) connecté à une sortie de ladite première porte OU exclusif et une troisième porte OU exclusif (24) connectée de façon à recevoir ledit signal retardé et un signal non retardé provenant de ladite première porte OU exclusif pour produire lesdites impulsions d'horloge à fréquence multipliée.

7. Circuit pour décoder deux trains d'impulsions en quadrature, comprenant: une première porte OU exclusif (14) pour recevoir et comparer les trains d'impulsions et pour engendrer des impulsions ayant 2 fois la fréquence des trains d'impulsions; des moyens (24, 26) comprenant un moyen de retard (26) connecté à une sortie de la première porte OU exclusif pour engendrer des impulsions ayant à fréquence quadruple; un premier moyen logique bistable (36) agencé de façon à retarder l'un desdits trains d'impulsions et ayant une entrée d'horloge sensible aux impulsions à fréquence quadruple; une deuxième porte OU exclusif (40) connectée de façon à comparer ledit train d'impulsions retardé à l'autre train d'impulsions et pour engendrer des impulsions de séquence de trains d'impulsions; un deuxième moyen logique bistable (38) ayant une première entrée connectée à une sortie de ladite deuxième porte OU exclusif pour engendrer un état logique sélectionné en réponse aux impulsions à fréquence quadruple; et des moyens (30, 32) pour retarder lesdites impulsions à fréquence quadruple de telle façon qu'un front de référence de ces dernières se produise toujours après un changement de l'état logique du deuxième moyen logique bistable.

**FIG_1**

(A)   A

(B)   B

(C) EX. OR 14

(D) DELAY 18

(E) EX. OR 16

(F) EX. OR 20

(G) DELAY 26

(H) EX. OR 24

(I) LATCH 22

(J) ONE-SHOT 30

(K) INVERT 32

**FIG_2**

INPUT A

INPUT B

FF1

FF2

DELAY

DELAY

A LAGS B

A LEADS B

4 x CLOCK

## FIG_3

A LEADS B ◄──┼──► A LAGS B

(A)     A

(B)     B

(C) EX. OR 14

(D) EX. OR 24

(E) FF 36

(F) EX. NOR 40

(G) FF 38

(H) NOR 44

(I) INVERT 32

## FIG_4

2

FIG_5